# FASCICULE DE BREVET EUROPEEN

(11) **EP 1 469 635 B1**
(45) Date de publication et mention de la délivrance du brevet: **27.09.2006**
(21) Numéro de dépôt: 04290794.9
(22) Date de dépôt: 24.03.2004
(51) Int. Cl.: H04L 12/24, H04L 12/26

(54) **Dispositif de gestion de mesures de paramètres de flux de type bout-en-bout pour un réseau de communications multi-domaines**
Vorrichtung zur Steuerung der Messung Ende-zu-Ende von Flussparametern für ein Multi-Domain Kommunikationsnetz
Device for managing end-to-end flow parameter measurements for a multi-domain communications network

(30) Priorité: 18.04.2003 FR 0304854
(43) Date de publication de la demande: 20.10.2004
(73) Titulaire: ALCATEL, 75008 Paris (FR)
(72) Inventeur: Martinot, Olivier, 91210 Draveil (FR); Betge-Brezetz, Stéphane, 75015 Paris (FR); Chevanne, Michel, 92140 Clamart (FR); Delegue, Gérard, 94230 Cachan (FR); Marilly, Emmanuel, 92160 Antony (FR)
(74) Mandataire: Chaffraix, Sylvain

(56) Documents cités:
- EP-A- 1 229 685
- US-A- 6 108 782
- YANG J ET AL: "A SCALABLE, WEB-BASED ARCHITECTURE FOR HIERARCHICAL NETWORK MANAGEMENT" 1999 IEEE GLOBAL TELECOMMUNICATIONS CONFERENCE. GLOBECOM'99. SEAMLESS INTERCONNECTION FOR UNIVERSAL SERVICES. RIO DE JANEIRO, BRAZIL, DEC. 5-9, 1999, IEEE GLOBAL TELECOMMUNICATIONS CONFERENCE, NEW YORK, NY: IEEE, US, vol. 3, 5 décembre 1999 (1999-12-05), pages 1882-1888, XP001003926 ISBN: 0-7803-5797-3
- BHOJ P ET AL: "SLA management in federated environments" COMPUTER NETWORKS, ELSEVIER SCIENCE PUBLISHERS B.V., AMSTERDAM, NL, vol. 35, no. 1, janvier 2001 (2001-01), pages 5-24, XP004304815 ISSN: 1389-1286

## Description

L'invention concerne les réseaux de communications de type multi-domaines, et plus particulièrement ceux dont les opérateurs ont passé avec leurs clients des accords de niveau de service portant sur le respect d'une qualité de service (QoS).

Les opérateurs de réseau mettent à la disposition de leurs clients de nombreux réseaux de communications qui sont souvent couplés les uns aux autres par l'intermédiaire d'équipements, tels que des routeurs périphériques (ou « edge routers »). Ces réseaux couplés, qui sont fréquemment de types différents, constituent en fait un « super-réseau », plus connu sous le nom de réseau « multi-domaines » (étant donné que chaque réseau définit alors un domaine).

Par ailleurs, les opérateurs proposent généralement à leurs clients des accords de niveau de service (ou SLA pour « Service Level Agreement ») par lesquels ils s'engagent à leur garantir une qualité de service (ou QoS) définie par des valeurs de paramètres du réseau, tels que l'instabilité (ou « jitter »), la perte de paquets et le retard de transmission.

Certains de ces accords portent même sur le respect d'une qualité de service prédéfinie lors de la traversée d'un ou plusieurs réseaux de communications couplés.

Afin de permettre le respect des engagements de qualité de service lors de la traversée d'un réseau, les réseaux de communications sont généralement équipés d'un appareil de mesure chargé d'effectuer des mesures, dites « de bout-en-bout » (ou « end-to-end »), de certains paramètres de réseau. Le procédé de mesure mis en oeuvre par un tel appareil dépend généralement du type du réseau objet des mesures. Plus précisément, il existe principalement trois types de procédé de mesure.

Un premier type consiste à effectuer au niveau du point d'entrée (ou « ingress point ») et du point de sortie (ou « egress point ») du réseau (ou domaine) des mesures passives sur tous les flux et tous leurs paquets. Ce procédé est particulièrement précis puisqu'il porte sur l'intégralité du flux en transit. Des appareils de mesure mettant en oeuvre ce procédé sont notamment commercialisés sous la forme de « middle boxes » par les sociétés Fidelia, Brix Network et Ipanema.

Un deuxième type consiste à effectuer des mesures actives en transmettant régulièrement entre les points d'entrée et de sortie un flux marqué complémentaire. Ce procédé utilisant un flux dédié complémentaire, il ne permet donc de délivrer que des valeurs moyennes. Les flux marqués peuvent cependant être de types différents afin d'être plus représentatifs des différents types de flux réels (TCP, UDP, DSCP,...). Des appareils de mesure mettant en oeuvre ce procédé sont notamment commercialisés par les sociétés Agilent et Cisco.

Un troisième type consiste à effectuer des mesures à partir d'un modèle de mesure. Ce dernier est élaboré à partir de la modélisation du réseau et du comportement des différents types de flux au sein dudit réseau. Ce procédé permet d'estimer quelques valeurs de paramètres de flux de type bout-en-bout à partir de quelques paramètres du réseau, extraits d'équipements de réseau via leurs bases d'informations de gestion (ou MIB pour « Management Information Base ») ou via des requêtes reposant sur des commandes dédiées de type CLI (pour « Command Line Interface »).

Du fait de la diversité et de l'hétérogénéité des réseaux, deux ou trois des procédés de mesures précités peuvent coexister en même temps au sein d'un réseau multi-domaines. Les différents domaines d'un tel réseau étant définis à partir de critères technologiques et fonctionnels généralement différents, voire même arbitraires, et n'étant généralement pas liés par un critère administratif commun, il n'existe pas de solution permettant d'y effectuer, de façon simple et automatisée, des mesures globales de flux de type bout-en-bout. On entend ici par « mesures globales » des mesures portant sur la traversée d'au moins deux domaines couplés.

Comme solution de gestion multidomaine de réseau, on peut également citer les articles *« A scalable, web-based architecture for hierarchical network Management»* de Yang J. *et al.* (IEEE Global Telecommunications Conference Globecom 99, 1999) et « *SLA management in federated environments* » de Bhoj P. *et al.* (Computer Networks, Elsevier Science Publishers B.V. Amsterdam, vol. 35, no. 1, janvier 2001).

L'invention a donc pour but de remédier à cet inconvénient.

Elle propose à cet effet un dispositif de gestion de mesures de paramètres de flux de type « bout-en-bout » pour un réseau de communications comportant au moins deux domaines couplés entre eux et équipés chacun d'un appareil de mesure délivrant des mesures locales représentatives de valeurs de paramètres de flux de bout-en-bout local, ces appareils de mesure mettant en oeuvre des procédés de mesure différents.

On entend ici par « flux de bout-en-bout local » un flux transitant entre les points d'entrée et de sortie d'un domaine d'un réseau multi-domaines. Par conséquent on entendra par « flux de bout-en-bout global » un flux transitant entre des points d'entrée et de sortie d'un réseau multi-domaines via au moins deux de ses domaines.

Ce dispositif se caractérise par le fait qu'il comporte, d'une part, des moyens de contrôle chargés d'ordonner l'instauration d'une configuration de mesure spécifique dans l'appareil de mesure de chaque domaine du réseau, en fonction d'au moins le procédé de mesure qu'il met en oeuvre et de spécifications globales de mesure(s), et d'autre part, des moyens de calcul capables de délivrer des premières données (ou mesures globales) représentatives de valeurs de paramètres de flux de bout-en-bout global à partir des mesures locales délivrées par les différents appareils de mesure configurés.

Le dispositif de gestion selon l'invention pourra comporter des caractéristiques complémentaires qui pourront être prises séparément et/ou en combinaison, et en particulier :
- des moyens de contrôle chargés d'ordonner l'instauration d'une configuration de mesure spécifique dans chaque appareil de mesure en fonction également de secondes données représentatives de l'agencement de son domaine,
- des moyens de contrôle comprenant des premiers moyens d'interface permettant de définir les spécifications globales de mesure(s),
- des moyens de contrôle comprenant des moyens de configuration chargés de déterminer pour chaque appareil de mesure des spécifications locales de mesure(s) définissant sa configuration spécifique à instaurer. Dans ce cas, les moyens de configuration peuvent être également chargés de déterminer des données représentatives de la correspondance entre les spécifications locales de mesure(s) et les spécifications globales de mesure(s),
- des moyens de mémorisation définissant une première mémoire stockant des données représentatives des spécifications globales de mesure(s). Dans ce cas, les moyens de mémorisation peuvent également définir une deuxième mémoire stockant des données représentatives des spécifications locales de mesure(s) et/ou des données de configuration. Par ailleurs, lorsqu'au moins un domaine comprend un appareil de mesure mettant en oeuvre un procédé de mesure reposant sur un modèle de mesure, les moyens de mémorisation peuvent également définir une troisième mémoire stockant des données représentatives de ce modèle de mesure,
- des moyens de calcul comprenant un module de calcul principal chargé de déterminer les premières données (ou mesures globales) à partir des mesures locales délivrées par les appareils de mesure configurés, des spécifications locales de mesure(s) et d'au moins un modèle d'agrégation de valeurs, ainsi qu'éventuellement de données complémentaires définissant par exemple un modèle d'agrégation de valeurs complémentaire. Dans ce cas, on stocke préférentiellement dans la deuxième mémoire des données représentatives du modèle d'agrégation de valeurs et/ou du modèle d'agrégation de valeurs complémentaire. En variante, le module de calcul principal peut être chargé de déterminer les premières données (ou mesures globales) à partir des mesures locales délivrées par les appareils de mesure configurés, des spécifications locales de mesure(s), d'au moins un modèle d'agrégation de valeurs et de l'un au moins des modèles de mesure, ainsi qu'éventuellement des données complémentaires définissant par exemple un modèle de mesure complémentaire. Dans ce cas, on stocke préférentiellement dans la troisième mémoire des données représentatives du modèle de mesure complémentaire,
- des moyens de calcul comprenant un module de calcul auxiliaire chargé de déterminer des secondes données, représentatives des contributions (relatives et/ou absolues) respectives des différents domaines aux premières données (ou mesures globales), à partir des mesures locales délivrées par les appareils de mesure configurés et des spécifications locales de mesure(s). Dans ce cas, on stocke préférentiellement les secondes données dans la première mémoire,
- une première mémoire stockant préférentiellement les premières données,
- une interface de sortie couplée aux moyens de calcul et capable de délivrer sur ordre, sur sa sortie, les premières et/ou secondes données. En variante, l'interface de sortie peut extraire sur ordre, de la première mémoire, les premières et/ou secondes données pour les délivrer sur une sortie. Dans ce cas, on peut également prévoir une base d'informations de gestion (MIB) pour stocker les premières et/ou secondes données délivrées par la sortie de l'interface de sortie,
- des seconds moyens d'interface agencés sous la forme de modules d'interface dédiés chacun à un procédé de mesure, couplés aux moyens de contrôle, aux appareils de mesure et aux moyens de calcul, et chargés chacun de configurer l'appareil de mesure correspondant et de collecter ses mesures locales afin d'alimenter les moyens de calcul. L'un de ces modules d'interface peut également constituer un appareil externe de mesure pour un domaine du réseau de communications multi-domaines.

L'invention concerne également un réseau de communications multi-domaines équipé d'au moins un dispositif de gestion du type de celui présenté ci-avant.

L'invention peut notamment être mise en oeuvre dans toutes les technologies réseaux qui doivent être gérées, et notamment dans les réseaux de transmission (par exemple de type WDM, SONET, SDH), de données (par exemple de type Internet-IP ou ATM) ou de voix (par exemple de type classique, mobile ou NGN).

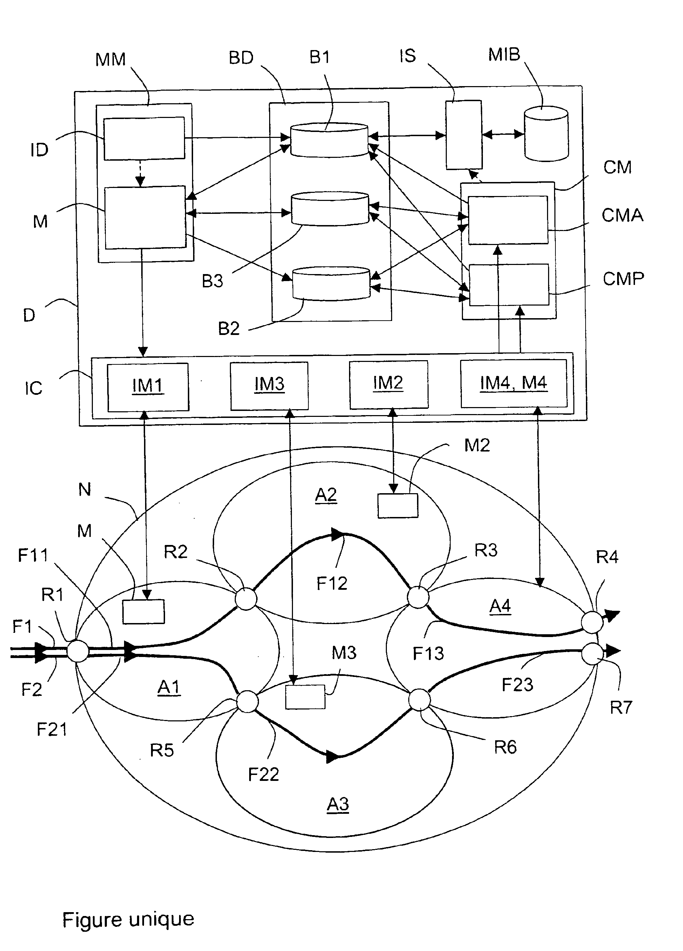

D'autres caractéristiques et avantages de l'invention apparaîtront à l'examen de la description détaillée ci-après, et du dessin annexé, sur lequel l'unique figure illustre de façon schématique un réseau de communications multi-domaines équipé d'un dispositif de gestion de réseau selon l'invention. Le dessin annexé pourra non seulement servir à compléter l'invention, mais aussi contribuer à sa définition, le cas échéant.

L'invention a pour objet de permettre la gestion centralisée de mesures de paramètres de flux de type « bout-en-bout » dans un réseau de communications de type multi-domaines à procédés de mesure multiples.

Dans l'exemple, non limitatif, illustré sur l'unique figure, le réseau de communications N est constitué de quatre réseaux de communications A1 à A4, appelés domaines, couplés entre eux par des équipements de réseau de type routeurs périphériques ou de bordure (ou « edge routers ») R. L'invention n'est pas limitée à un nombre (i) de domaines Ai égal à quatre. Ce nombre i peut en effet prendre n'importe quelle valeur supérieure ou égale à deux.

Par ailleurs, dans cet exemple, on a défini un premier flux global F1 entre les domaines A1 et A4, via le domaine A2, et un second flux global F2 entre les domaines A1 et A4, via le domaine A3. Ces flux globaux F1 et F2 sont dits « de bout-en-bout » (ou « end-to-end ») dans la mesure où il traversent intégralement le réseau N via au moins deux de ses domaines Ai. Chaque flux global F1, F2 peut être ici décomposé en trois portions de flux local, également de type bout-en-bout dans la mesure où ces portions traversent chacune intégralement un domaine Ai.

Plus précisément, le flux global F1 est décomposable, d'une première part, en une première portion de flux local F11, associée au domaine A1 et définie entre un routeur périphérique (d'entrée) R1 et un routeur périphérique R2, d'une deuxième part, en une deuxième portion de flux local F12, associée au domaine A2 et définie entre le routeur périphérique R2 et un routeur périphérique R3, et d'une troisième part, en une troisième portion de flux local F13, associée au domaine A4 et définie entre le routeur périphérique R3 et un routeur périphérique (de sortie) R4.

De même, le flux global F2 est décomposable, d'une première part, en une première portion de flux local F21, associée au domaine A1 et définie entre le routeur périphérique (d'entrée) R1 et un routeur périphérique R5, d'une deuxième part, en une deuxième portion de flux local F22, associée au domaine A3 et définie entre le routeur périphérique R5 et un routeur périphérique R6, et d'une troisième part, en une troisième portion de flux local F23, associée au domaine A4 et définie entre le routeur périphérique R6 et un routeur périphérique (de sortie) R7.

Le premier domaine A1 est équipé d'un appareil de mesure M1 chargé d'effectuer des mesures locales des valeurs prises par des paramètres des flux de bout-en-bout locaux F11 et F21. Par exemple, cet appareil de mesure M1 met en oeuvre un procédé de mesure reposant sur un modèle de mesure élaboré à partir de la modélisation du premier réseau (ou domaine) A1 et du comportement des différents types de flux qui transitent au sein de ce domaine A1. Un tel procédé de mesure permet d'estimer quelques valeurs de paramètres de flux de bout-en-bout à partir de quelques paramètres du réseau A1, extraits de certains de ses équipements de réseau (routeurs, commutateurs (ou « switchs »), serveurs) via leurs bases d'informations de gestion (ou MIB pour « Management Information Base ») ou via des requêtes reposant sur des commandes dédiées, par exemple de type CLI (pour « Command Line Interface »).

Le deuxième domaine A2 est équipé d'un appareil de mesure M2 chargé d'effectuer des mesures locales des valeurs prises par des paramètres du flux de bout-en-bout local F12. Par exemple, cet appareil de mesure M2 met en oeuvre un procédé de mesure reposant sur des mesures passives de tous les types de flux F12 et de tous leurs paquets. Il est donc raccordé aux routeurs périphériques R2 et R3, dans lesquels sont implantés (ou auxquels sont connectés) des agents d'observation. Des appareils de mesure mettant en oeuvre ce procédé de mesure passive sont notamment commercialisés sous la forme de « middle boxes » par les sociétés Fidelia, Brix Network et Ipanema. Le fonctionnement détaillé de ces middle boxes peut être trouvé aux adresses internet « http://www.ipanematech.com », « http://www.brixnetworks.com », et « http://www.fidelia.com/news updates/netvigil.phtml », notamment.

Le troisième domaine A3 est équipé d'un appareil de mesure M3 chargé d'effectuer des mesures locales des valeurs prises par des paramètres du flux de bout-en-bout local F22. Par exemple, cet appareil de mesure M3 met en oeuvre un procédé de mesure reposant sur des mesures actives, effectuées régulièrement (périodiquement) entre le routeur d'entrée R5 et le routeur de sortie R6, sur un flux marqué (ou « tagged ») complémentaire. Ces mesures actives sont effectuées par des agents d'observation implantés dans les (ou connectés aux) routeurs périphériques R5 et R6. Ce procédé délivre des mesures représentatives de valeurs moyennes. Plusieurs types de flux marqués sont généralement utilisés afin d'être représentatifs des différents types de flux (TCP, UDP, DSCP,...) qui transitent effectivement dans le domaine A3. Des appareils de mesure mettant en oeuvre ce procédé de mesure active sont notamment commercialisés par les sociétés Allot, Cisco, Agilent et NetlQ. Le fonctionnement détaillé de ces appareils peut être trouvé aux adresses internet « http: // www.allot.com », « http: // www.cisco.com/warp/public/126/saa.html », « http: // www.agilent.com/cm/rdmfg/firehunter/ », et « http: // www.netiq.com/products/chr/default.asp », notamment.

Le quatrième domaine A4 est équipé d'un appareil de mesure M4 chargé d'effectuer des mesures locales des valeurs prises par des paramètres des flux de bout-en-bout locaux F13 et F23. Par exemple, cet appareil de mesure M4 met en oeuvre un procédé de mesure reposant sur des mesures passives de tous les types de flux F13 et F23 et de tous leurs paquets. Dans cet exemple, l'appareil de mesure M4 est déporté (ou externe), et plus précisément intégré dans le dispositif de gestion D selon l'invention, qui sera décrit ci-après.

Dans ce qui suit, on considère que le réseau multi-domaines N est un réseau de type internet/IP. Mais, l'invention s'applique à d'autres types de réseau, comme par exemple aux réseaux de transmission de type WDM, SONET ou SDH, de données de type ATM, ou de voix de type classique, mobile ou NGN, et à d'autres protocoles de gestion de réseau, comme par exemple TL1, CORBA ou CMISE/CMIP.

L'invention propose un dispositif de gestion D chargé de configurer les différents appareils de mesure Mi en fonction de spécifications globales de mesure(s) de paramètres de flux de bout-en-bout global, et de collecter les mesures locales délivrées par ces appareils de mesure configurés Mi afin de délivrer des premières données (ou mesures globales) représentatives des valeurs de paramètres de flux de bout-en-bout global correspondant aux spécifications globales.

Pour ce faire, le dispositif D comprend des moyens de contrôle MM chargés d'ordonner l'instauration d'une configuration de mesure spécifique dans l'appareil de mesure Mi de chaque domaine Ai du réseau N, et préférentiellement, comme on le verra plus loin, de déterminer chaque configuration spécifique, et des moyens de calcul CM déterminant les premières données (ou mesures globales) à partir, notamment, des mesures locales délivrées par les différents appareils de mesure configurés Mi.

Plus précisément, dans le mode de réalisation illustré, les moyens de contrôle MM comprennent tout d'abord une interface de définition ID permettant à un opérateur de définir les spécifications globales de mesure(s) de paramètres de flux de bout-en-bout global au sein du réseau multi-domaines N. Les spécifications globales, caractéristiques des mesures de bout-en-bout, définissent principalement le délai (ou retard) de transmission, la gigue, la perte de paquet de bout-en-bout, et les statistiques associées (maximum, minimum, moyenne, écart-type, ...).

Préférentiellement, le dispositif D comprend des moyens de mémorisation BD comportant une première mémoire B1 dans laquelle sont stockées les données représentatives des spécifications globales de mesure(s) délivrées par la sortie de l'interface de définition ID.

Les moyens de contrôle MM comprennent également un module de configuration MC chargé de déterminer pour chaque appareil de mesure Mi une configuration spécifique à instaurer. A cet effet, le module de configuration MC est préférentiellement couplé à la première mémoire B1. II peut ainsi en extraire les données représentatives des spécifications globales de mesure(s) de manière à déterminer des spécifications locales de mesure(s) définissant chaque configuration d'appareil de mesure Mi. Cette détermination prend en compte le procédé de mesure mis en oeuvre par l'appareil de mesure Mi concerné, ainsi que, préférentiellement, l'agencement matériel et fonctionnel du domaine Ai équipé dudit appareil Mi.

Un ensemble de règles définies par l'opérateur permet, par exemple, de déterminer dans chaque domaine Ai comment se déduit la mesure locale en fonction de la spécification globale, du type de service (type d'application, classe de service) et du type de client.

Préférentiellement, les moyens de mémorisation BD, comportent une deuxième mémoire B2 dans laquelle sont stockées les données représentatives des spécifications locales de mesure(s) déterminées par le module de configuration MC.

Il est important de noter que les spécifications locales, qui définissent les configurations des appareils de mesure Mi qui mettent en oeuvre un procédé de mesure reposant sur un modèle de mesure, sont également déterminées en fonction du modèle de mesure concerné. Par conséquent, les données représentatives des modèles de mesure, utilisés par certains appareils de mesure Mi (ici M1) du réseau multi-domaines N, sont préférentiellement stockées dans une troisième mémoire B3 des moyens de mémorisation BD, couplée, notamment au module de configuration MC.

Selon le moyen de mesure mis en oeuvre, le modèle de mesure est un modèle faisant correspondre une caractéristique de flux de bout-en-bout, et éventuellement le chemin emprunté par ce flux, ainsi que la spécification de la mesure (délai, gigue, ...) et la spécification de la mesure locale.

Le module de configuration MC peut être également configuré de manière à déterminer des données de correspondance représentatives de la correspondance entre les spécifications locales de mesure(s), qu'ils ont déterminées, et les spécifications globales de mesure(s), issues de la première mémoire B1. Par exemple, dans le cas du domaine A1, la correspondance se fait entre la caractéristique du flux et un ensemble de mesures élémentaires permettant de calculer la valeur correspondant à la spécification de mesure locale.

Ces données de configuration sont préférentiellement stockées dans la deuxième mémoire B2.

Il est important de noter que le module de configuration MC pourrait être couplé à l'interface de définition ID, afin d'être directement alimentée en spécifications globales.

Egalement de préférence, le dispositif de gestion G comporte une interface de configuration IC, couplée au module de configuration MC et agencée sous la forme de modules d'interface IMj dédiés chacun à un type de procédé de mesure. Cette interface de configuration IC est également couplée aux moyens de calcul CM afin de les alimenter en mesures locales, collectées par ses modules d'interface IMj auprès des différents appareils de mesure Mi des domaines Ai du réseau multi-domaines N.

Dans l'exemple illustré, l'interface de configuration IC comprend quatre modules d'interface IMj (j = 1 à 4).

Un premier module d'interface IM1 est chargé de configurer tous les appareils Mi, du réseau multi-domaines N, mettant en oeuvre un procédé de mesure reposant sur un modèle de mesure, avec les spécifications locales qui ont été déterminées à cet effet par le module de configuration MC. Par conséquent, le premier module d'interface IM1 est couplé à tous les appareils de mesure Mi du type précité (ici, seul M1 est concerné). Il leur transmet les spécifications locales selon un protocole d'échange, par exemple SNMP (pour « Simple Network Management Protocol » RFC 2571-2580), et collecte leurs mesures afin de les communiquer aux moyens de calcul CM.

Il est important de noter que le premier module d'interface IM1 peut ne collecter que les données d'information, extraites des équipements du domaine A1, qui sont utilisées par le modèle de mesure correspondant. Dans ce cas, la mesure locale est soit effectuée par le premier module d'interface IM1, soit par les moyens de calcul CM (ce qui est préférable).

Un deuxième module d'interface IM2 est chargé de configurer les appareils Mi, qui sont implantés au sein des domaines Ai du réseau multi-domaines N et mettent en oeuvre un procédé de mesure passive, avec les spécifications locales qui ont été déterminées à cet effet par le module de configuration MC. Par conséquent, le deuxième module d'interface IM2 est couplé à tous les appareils de mesure Mi du type précité (ici, seul M2 est concerné), de préférence via leurs bases d'informations de gestion MIB (dans lesquelles ils stockent leur mesures locales). Il leur transmet les spécifications locales selon un protocole d'échange, par exemple SNMP, et collecte leurs mesures afin de les communiquer aux moyens de calcul CM.

Un troisième module d'interface IM3 est chargé de configurer les appareils Mi, qui sont implantés au sein des domaines Ai du réseau multi-domaines N et mettent en oeuvre un procédé de mesure active, avec les spécifications locales qui ont été déterminées à cet effet par le module de configuration MC. Par conséquent, le troisième module d'interface IM3 est couplé à tous les appareils de mesure Mi du type précité (ici, seul M3 est concerné). Il leur transmet les spécifications locales selon un protocole d'échange, par exemple SNMP, et collecte leurs mesures afin de les communiquer aux moyens de calcul CM.

Un quatrième module d'interface IM4 sert ici d'appareil de mesure externe (ou déporté) M4, mettant en oeuvre un procédé de mesure passive, pour le quatrième domaine A4. En d'autres termes, il s'auto-configure avec les spécifications locales qui ont été déterminées à cet effet par le module de configuration MC. Ce quatrième module d'interface IM4 n'est couplé qu'au seul quatrième domaine A4, et notamment à ses routeurs périphériques R3, R4, R6 et R7 dans lesquels sont implantés (ou auxquels sont connectés) des agents d'observation, et communique ses propres mesures aux moyens de calcul CM.

Il est important de noter que l'utilisation d'un appareil de mesure externe (ou déporté), intégré dans un module d'interface (IM4), est adaptée aux situations dans lesquelles le protocole d'échange avec les agents d'observation, implantés dans les routeurs périphériques, est parfaitement connu.

Par ailleurs, on peut prévoir une procédure de recherche automatique des capacités de configuration des différents appareils de mesure Mi du réseau multi-domaines N, afin de faciliter l'élaboration des configurations locales desdits appareils de mesure par le module de configuration MC. Dans ce cas, les moyens de configuration MM comportent un étage de recherche, couplé au module de configuration MC et à l'interface de configuration IC, et chargé, lorsque le module de configuration MC le requiert, de procéder à la recherche des capacités de configuration des appareils de mesure Mi du réseau N. Cela nécessite la mise en place de moyens de recherche d'information sur les capacités des équipements.

Les moyens de calcul CM comprennent un module de calcul principal MCP chargé de déterminer des premières données (ou mesures globales) à partir des mesures locales délivrées par les appareils de mesure configurés Mi.

Plus précisément, le module de calcul principal MCP effectue ses déterminations en tenant compte au moins des configurations locales propres à chaque appareil de mesure Mi et dont les données représentatives sont stockées dans la seconde mémoire B2. C'est notamment le cas lorsque les appareils de mesure Mi (ici M2 à M4) mettent en oeuvre un procédé de mesure active ou passive.

Lorsque le procédé de mesure repose sur un modèle de mesure, le module de calcul principal MCP effectue ses déterminations en tenant compte des configurations locales propres à l'appareil de mesure Mi (ici M1) correspondant et du modèle de mesure correspondant, dont les données représentatives sont stockées dans la troisième mémoire B3.

Les mesures locales reçues de l'interface de configuration IC peuvent éventuellement faire l'objet d'un traitement (ou d'une transformation). Elles font ensuite l'objet d'une agrégation destinée à fournir les premières données (ou mesures globales) représentatives des mesures globales de flux de bout-en-bout qui caractérisent les flux globaux F1 et F2 lors de leur transit dans le réseau multi-domaines N. Ces mesures globales sont par exemple représentatives de l'instabilité (ou « jitter ») du réseau N, de la perte de paquets ou du retard ou délai (« delay ») de transmission, ainsi que des statistiques associées (maximum, minimum, moyenne, écart-type, ...).

Pour effectuer cette agrégation, le module de calcul principal MCP utilise un modèle d'agrégation de valeurs, dont les données représentatives sont préférentiellement stockées dans la deuxième mémoire B2.

Le modèle d'agrégation est assez simple lorsque la mesure globale porte sur un paramètre de type additif, tel que le retard (ou « delay »). Il suffit en effet de sommer l'ensemble des mesures locales de retard pour obtenir la valeur du retard global induit par la traversée du réseau multi-domaines N. Mais, il peut être complexe lorsque la mesure globale porte sur un paramètre non additif, tel qu'un écart-type ou une valeur maximale. En particulier, la précision globale peut être déduite des agrégations locales effectuées par les appareils de mesure Mi au sein de leurs domaines Ai respectifs, à l'aide d'un modèle du type du modèle d'agrégation d'écart-type (modèle faisant le lien entre l'écart-type de la mesure globale et les écart-types issus des mesures locales).

Par exemple, dans le cas du flux global F2, le retard global, introduit par le trajet entre les routeurs périphériques R1 et R7, est obtenu par l'agrégation, d'une première part, du retard introduit par le trajet entre les routeurs périphériques R1 et R5, estimé par l'appareil M1 après extraction des paramètres pertinents et application du modèle de mesure, d'une deuxième part, du retard introduit par le trajet entre les routeurs périphériques R5 et R6, dont la valeur moyenne est estimée par l'appareil M3, et d'une troisième part, du retard introduit par le trajet entre les routeurs périphériques R6 et R7, déterminé par l'appareil M4 implanté dans le quatrième module d'interface IM4.

Par ailleurs, le module de calcul principal MCP peut également prendre en compte le fait qu'une partie située entre deux domaines Ai n'a pas fait l'objet de mesures locales. Cela peut notamment être le cas lorsque les mesures ne tiennent pas compte du retard interne induit par un routeur, ou d'un routeur servant d'interface de couplage entre deux routeurs périphériques appartenant à deux domaines adjacents. Afin d'intégrer ces parties omises dans le calcul des premières données (ou mesures globales), le module de calcul principal MCP utilise des données complémentaires définissant un modèle d'agrégation de valeurs complémentaire. Ces données complémentaires sont préférentiellement stockées dans la deuxième mémoire B2.

II est important de noter que, lorsque la partie omise concerne un domaine Ai objet de mesures reposant sur un modèle de mesure, il est préférable que les données complémentaires définissent un modèle de mesure complémentaire. Ces données complémentaires sont alors préférentiellement stockées dans la troisième mémoire B3.

Les mesures globales (ou premières données) délivrées par le module de calcul principal MCP sont préférentiellement stockées dans la première mémoire B1.

Les moyens de calcul peuvent également comprendre un module de calcul auxiliaire CMA chargé de déterminer des secondes données représentatives des contributions respectives des différents domaines Ai, du réseau multi-domaines N, aux mesures globales (ou premières données). Plus précisément, le module de calcul auxiliaire CMA effectue ses déterminations en tenant compte, d'une part, des mesures locales délivrées par les appareils de mesure configurés Mi, et d'autre part, des configurations locales propres à chaque appareil de mesure Mi, dont les données représentatives sont stockées dans la deuxième mémoire B2, et éventuellement des modèles de mesure, dont les données représentatives sont stockées dans la troisième mémoire B3. Les valeurs des mesures locales, qui permettent par ailleurs de constituer la mesure globale, sont préférentiellement conservées afin de permettre l'estimation des poids relatifs (ou absolus) de chacun des domaines dans la mesure globale.

Les contributions déterminées peuvent être relatives et/ou absolues. Elles sont préférentiellement stockées dans la première mémoire B1.

Le dispositif de gestion G peut également comporter, comme illustré, une interface de sortie IS couplée à la première mémoire B1 et/ou aux moyens de calcul CM. Cette interface de sortie IS est destinée à délivrer sur sa sortie les premières données (mesures globales) et/ou secondes données (contributions relatives et/ou absolues).

L'interface de sortie IS agit préférentiellement sur ordre d'un équipement externe, par exemple à l'aide de commandes de type CLI (pour « Command Line Interface »), ou bien de façon automatique lorsqu'elle est configurée à cet effet. L'équipement externe peut être par exemple le serveur de gestion du système de gestion de réseau (ou NMS pour « Network Management System ») du réseau de communications multi-domaines N, qui est chargé d'analyser continuellement l'état des ressources et les performances du réseau de manière à anticiper ou détecter des problèmes ou pannes et à déterminer les actions à entreprendre de sorte que les clients du réseau ne soient pas pénalisés. Les données délivrées par l'interface de sortie IS alimentent alors la couche NMS, et notamment son collecteur de données (ou « collector »), soit directement (dans ce cas elle constitue une base de données classique), soit indirectement via une base d'informations de gestion MIB implantée dans le dispositif de gestion D et dédiée aux mesures globales ou à un ensemble de fonctions permettant d'accéder auxdites mesures globales.

Mais, on pourrait envisager que les moyens de calcul CM délivrent leurs premières données (mesures globales) et secondes données (contributions relatives et/ou absolues) soit directement sur une sortie du dispositif de gestion D, par exemple à destination du collecteur de données de la couche NMS, soit à l'interface de sortie IS, soit encore à la MIB.

La transmission des résultats délivrés par le dispositif de gestion D, par exemple à la couche NMS, s'effectue à l'aide d'un protocole de gestion, tel que SNMP (pour « Simple Network Management Protocol » RFC 2571-2580).

Le dispositif de gestion selon l'invention, et notamment ses moyens de configuration MM, ses moyens de calcul CM, ses moyens de mémorisation BD, ses moyens d'interface de configuration IC et son interface de sortie IS, peuvent être réalisés sous la forme de circuits électroniques, de modules logiciels (ou informatiques), ou d'une combinaison de circuits et de logiciels.

L'invention ne se limite pas aux modes de réalisation de dispositif de gestion et de réseau de communications multi-domaines décrits ci-avant, seulement à titre d'exemple, mais elle englobe toutes les variantes que pourra envisager l'homme de l'art dans le cadre des revendications ci-après.

## Revendications

1. Dispositif (D) de gestion de mesures de paramètres de flux de type « bout-en-bout » pour un réseau de communications (N) constitué d'au moins deux domaines (Ai) couplés entre eux et équipés chacun d'un appareil de mesure (Mi) propre à délivrer des mesures locales représentatives de valeurs de paramètres de flux de bout-en-bout local, lesdits appareils de mesure (Mi) mettant en oeuvre des procédés de mesure différents, ledit dispositif comprenant:
i) des moyens de contrôle (MM)comprenant des moyens de configuration (MC) pour déterminer pour chaque appareil de mesure (Mi) des spécifications locales de mesure(s) définissant sa configuration spécifique à instaurer, en fonction d'au moins son procédé de mesure et de spécifications globales de mesure(s), et des moyens pour ordonner l'instauration desdites configurations spécifiques,
ii) des mayens de calcul (CM)comprenant un module de calcul principal (CMP) délivrant des premières données représentatives de valeurs de paramètres de flux de bout-en-bouf global à partir des mesures locales délivrées par lesdits appareils de mesure configurés (Mi), desdites spécifications locales de mesure(s) et d'au moins un modèle d'agrégation de valeurs, ledit dispositif étant **caractérisé en ce que** lesdits moyens de calcul (CM) comprennent un module de calcul auxiliaire (CMA) pour déterminer des secondes données représentatives de contributions respectives dès différents domaines auxdites premières données, à partir des mesures locales délivrées par lesdits appareils de mesure configurés (Mi) et desdites spécifications locales de mesure(s).

2. Dispositif selon la revendication 1, **caractérisé en ce que** lesdits moyens de contrôle (MM) possèdent de moyens pour ordonner l'instauration d'une de mesure spécifique dans chaque appareil de mesure (Mi) en fonction de son procédé de mesure, de secondes données représentatives de l'agencement de son domaine et de spécifications

3. Dispositif selon l'une des revendications 1 et 2, **caractérisé en ce que** lesdits moyens de contrôle (MM) comprennent des premiers moyens d'interface (ID) pour permettre la définition desdites spécifications globales de mesure(s).

4. Dispositif selon l'une des revendications 1 et 3, **caractérisé en ce que** lesdits moyens de configuration (MC) possèdent des moyens pour déterminer des données de correspondance représentatives de la correspondance entre lesdites spécifications locales de mesure(s) et lesdites spécifications globales de mesure(s).

5. Dispositif selon l'une des revendications 1 à 4, **caractérisé en ce qu'**il comprend des moyens de mémorisation (BD) définissant une première mémoire (B1) pour stocker des données représentatives desdites spécifications globales de mesure(s).

6. Dispositif selon la revendication 5, **caractérisé en ce que** lesdits moyens de mémorisation (BD) définissent une deuxième mémoire (B2) pour stocker des données représentatives desdites spécifications locales de mesure(s) et/ou desdites données de configuration.

7. Dispositif selon l'une des revendications 5 et 6, **caractérisé en ce qu'**en présence d'au moins un domaine (D1) comprenant un appareil de mesure (M1) mettant en oeuvre un procédé de mesure reposant sur un modèle de mesure, lesdits moyens de mémorisation (BD) définissent une troisième mémoire (B3) pour stocker des données représentatives dudit modèle de mesure.

8. Dispositif selon l'une des revendications précédentes, **caractérisé en ce que** ledit module de calcul principal (CMP) possède des moyens pour déterminer lesdites premières données à partir de données complémentaires, lesdits données complémentaires définissant un modèle d'agrégation de valeurs complémentaires et étant représentatives d'une partie dudit réseau de communication situé hors desdits domaines.

9. Dispositif selon l'une des revendications 6 à 8, **caractérisé en ce que** ladite deuxième mémoire (B2) stocke des données représentatives dudit modèle d'agrégation de valeurs et/ou dudit modèle d'agrégation de valeurs complémentaire.

10. Dispositif la revendications 7, **caractérisé en ce que** ledit module de calcul principal (CMP) possède des moyens pour déterminer lesdites premières données à partir des mesures locales délivrées par lesdits appareils de mesure configurés (Mi), desdites spécifications locales de mesure(s), d'au moins un modèle d'agrégation de valeurs et de l'un au moins desdits modèles de mesure.

11. Dispositif selon la combinaison des revendications 8 et 10, **caractérisé en ce que** lesdites données complémentaires définissent un modèle de mesure complémentaire.

12. Dispositif selon la revendication 11, **caractérisé en ce que** ladite troisième mémoire (B3) stocke des données représentatives dudit modèle de mesure et/ou dudit modèle de mesure complémentaire.

13. Dispositif selon l'un des revendications précédentes, **caractérisé en ce que** ledit module de calcul auxiliaire (CMA) détermine des secondes données représentatives de contributions relatives et/ou de contributions absolues.

14. Dispositif selon l'une des revendications précédentes, **caractérisé en ce que** ladite première mémoire (B1) stocke lesdites secondes données.

15. Dispositif selon l'une des revendications 5 à 14, **caractérisé en ce que** ladite première mémoire (B1) stocke lesdites premières données.

16. Dispositif selon l'une des revendications précédentes, **caractérisé en ce qu'**il comprend une interface de sortie (IS) couplée auxdits moyens de calcul (CM) pour délivrer sur ordre, sur une sortie, lesdites premières et/ou secondes données.

17. Dispositif selon l'une des revendications précédentes, **caractérisé en ce qu'**il comprend une interface de sortie (IS) pour extraire sur ordre, de ladite première mémoire (B1), lesdites premières et/ou secondes données pour les délivrer sur une sortie.

18. Dispositif selon l'une des revendications 16 et 17, **caractérisé en ce qu'**il comprend une base d'informations de gestion (MIB) alimentée en premières et/ou secondes données par ladite sortie de l'interface de sortie (IS).

19. Dispositif selon l'une des revendications précédente, **caractérisé en ce qu'**il comprend des seconds moyens d'interface (IC) agencés sous forme de modules d'interface (IMj) dédiés chacun à un procédé de mesure, couplés auxdits moyens de contrôle (MM), auxdits appareils de mesure (Mi) et auxdits moyens de calcul (CM) pour configurer chacun l'appareil de mesure correspondant (Mi) et collecter ses mesures locales, pour alimenter lesdits moyens de calcul (CM).

20. Dispositif selon la revendication 19, **caractérisé en ce que** l'un desdits modules d'interface (4) constitue un appareil externe de mesure (M4) pour un domaine (A4) dudit réseau de communications (N).

21. Réseau de communications (N) comportant au moins deux domaines (Ai) couplés entre eux et équipés chacun d'un appareil de mesure (Mi) pour délivrer des mesures locales représentatives de valeurs de paramètres de flux de bout-en-bout local, lesdits appareils de mesure (Mi) mettant en oeuvre des procédés de mesure différents, **caractérisé en ce qu'**il comprend au moins un dispositif de gestion (D) selon l'une des revendications précédentes.

## Claims

1. A device (D) for managing the measurement of parameters of end-to-end type data streams in a communication network (N) composed of at least two domains (Ai) coupled together, and each equipped with a measuring appliance (Mi) capable of delivering local measurements representing parameter values of local end-to-end data streams, where said measuring appliances (Mi) implement various measuring processes, said device including:
(i) monitoring means (MM) comprising configuration means (MC) for determining for each measuring appliance (Mi) local measurement(s) specification defining its specific configuration to be instituted, as a function of at least its process of measurement and of global measurement(s) specifications, and means for ordering the institution of the said specific configurations,
(ii) calculation means (CM) comprising a main calculation module (CMP) delivering first data representative of values of parameters of global end-to-end streams on the basis of the local measurements delivered by the said configured measuring appliances (Mi), of said local measurement(s) specifications and of at least a values aggregation model,
said device being **characterized in that** the said calculation means (CM) comprise an auxiliary calculation module (CMA) for determining second data representative of respective contributions of the various domains to the said first data, on the basis of the local measurements delivered by the said configured measuring appliances (Mi) and of the said local measurement(s) specifications.

2. A device as in claim 1, **characterised in that** said monitoring means (MM) possess means for ordering the institution of a specific measurement configuration in each measuring appliance (Mi) as a function of its measuring process, second data representing the arrangement of its domain and overall measurement specifications.

3. A device as in claim 1 or claim 2, **characterised in that** said monitoring means (MM) include the first interface means (ID) to allow the definition of said overall measurement specifications.

4. A device as in claim 1 or claim 3, **characterised in that** said configuration means (MC) posses means for determining corresponding data representing the correspondence between said local measurement specifications and said overall measurement specifications.

5. A device as in any of claims 1 to 4, **characterised in that** it includes storage means (BD) defining a first memory (B1) for storing data representing said overall measurement specifications.

6. A device as in claim 5, **characterised in that** said storage means (BD) define a second memory (B2) for storing data representing said local measurement specifications and/or said configuration data.

7. A device as in claim 5 or claim 6, **characterised in that** in the presence of at least one domain (D1) which includes a measuring appliance (M1) implementing a measuring process based upon a measurement model, said storage means (BD) define a third memory (B3) for storing data representing said measurement model.

8. A device as in any preceding claim, **characterised in that** said main calculation module (CMP) possesses means for determining said first data from additional data, said additional data defining an aggregation model for additional values and representing part of said communication network situated outside said domains.

9. A device as in any of claims 6 to 8, **characterised in that** said second memory (B2) stores data representing said value aggregation model and/or said additional value aggregation model.

10. A device as in claim 7, **characterised in that** said main calculation module (CMP) possesses means for determining said first data from local measurements delivered by said configured measuring appliances (Mi), said local measurement specifications, at least one value aggregation model and at least one of said measurement models.

11. A device as in claims 8 and 10, **characterised in that** said additional data define an additional measurement model.

12. A device as in claim 11, **characterised in that** said third memory (B3) stores data representing said measurement model and/or said additional measurement model.

13. A device as in any preceding claim, **characterised in that** said auxiliary calculation module (CMA) determines second data representing the relative contributions and/or absolute contributions.

14. A device as in any preceding claim, **characterised in that** said first memory (B1) stores said second data.

15. A device as in any of claims 5 to 14, **characterised in that** said first memory (B1) stores said first data.

16. A device as in any preceding claim, **characterised in that** it includes an output interface (IS) coupled to said calculation means (CM) for delivering said first and/or second data at an output when so ordered.

17. A device as in any preceding claim, **characterised in that** it includes an output interface (IS) for extracting said first and/or second data from said first memory (B1) at an output when ordered to do so.

18. A device as in claim 16 or claim 17, **characterised in that** it includes a management information database (MIB) which is supplied with first and/or second data by said output of the output interface (IS).

19. A device as in any preceding claim, **characterised in that** it includes second interface means (IC) arranged in the shape of interface modules (lMj), each dedicated to a measuring process, coupled to said monitoring means (MM), to said measuring appliances (Mi) and to said calculation means (CM), and each arranged to configure the corresponding measuring appliance (Mi) and to collect its local measurements in order to supply said calculation means (CM).

20. A device as in claim 19, **characterised in that** one of said interface modules (4) constitutes an external measuring appliance (M4) for a domain (A4) of said communication network (N).

21. A communication network (N) which includes at least two domains (Ai) coupled together and each equipped with a measuring appliance (Mi) capable of delivering local measurements representing parameter values of local end-to-end streams, where said measuring appliances (Mi) implement different measuring processes, **characterised in that** it includes at least a management device (D) as in any preceding claim.

## Patentansprüche

1. Vorrichtung (D) zur Steuerung der Messung Ende-zu-Ende von Flussparametern für ein Kommunikationsnetz (N), bestehend aus mindestens zwei Domains (Ai), die untereinander gekoppelt sind und von denen jede mit einem Messgerät (Mi) ausgestattet ist, welches dazu geeignet ist, lokale Daten zu liefern, die für lokale Ende-zu-Ende-Flussparameter repräsentativ sind, wobei die Messgeräte (Mi) unterschiedliche Messverfahren anwenden und wobei die Vorrichtung umfasst:
i) Managementmittel (MM), die Konfigurationsmittel (MC) umfassen, um für jedes Messgerät (Mi) lokale Spezifikationen für die Messung(en) festzulegen, die seine spezifische einzuführende Konfiguration in Abhängigkeit von mindestens seinem Messverfahren und globalen Spezifikationen der Messung(en) definieren, sowie Mittel, um die Einführung der spezifischen Konfigurationen anzuordnen;
ii) Rechenmittel (CM), umfassend ein Hauptrechenmodul (CMP), das erste, für Parameterwerte des globalen Ende-zu-Ende-Flusses repräsentative Daten ausgehend von den durch die konfigurierten Messgeräte (Mi) gelieferten lokalen Messungen, von den lokalen Spezifikationen der Messung(en) und von mindestens einem Werteaggregationsmodell liefert;
wobei die Vorrichtung **dadurch gekennzeichnet ist, dass** die Rechenmittel (CM) ein Hilfsrechenmodul (CMA) umfassen, um zweite Daten zu bestimmen, die für die jeweiligen Beiträge der verschiedenen Domains zu den ersten Daten repräsentativ sind, und zwar ausgehend von durch die konfigurierten Messgeräte (Mi) und die lokalen Spezifikationen der Messung(en) gelieferten lokalen Messungen.

2. Vorrichtung nach Anspruch 1, **dadurch gekennzeichnet, dass** die Managementmittel (MM) Mittel besitzen, um die Einführung einer spezifischen Messkonfiguration in jedem Messgerät (Mi) in Abhängigkeit seinem Messverfahren, von zweiten, für die Anordnung seiner Domain repräsentativen Daten und von globalen Spezifikation der Messung(en) anzuordnen.

3. Vorrichtung nach einem der Ansprüche 1 und 2, **dadurch gekennzeichnet, dass** die Managementmittel (MM) erste Schnittstellenmittel (ID) umfassen, um die Definition der globalen Spezifikationen der Messung(en) zu ermöglichen.

4. Vorrichtung nach einem der Ansprüche 1 und 3, **dadurch gekennzeichnet, dass** die Konfigurationsmittel (MC) Mittel umfassen, um Entsprechungsdaten zu bestimmen, die für die Entsprechung zwischen den lokalen Spezifikationen der Messung(en) und den globalen Spezifikationen der Messung(en) repräsentativ sind.

5. Vorrichtung nach einem der Ansprüche 1 bis 4, **dadurch gekennzeichnet, dass** sie Speichermittel (BD) umfasst, die einen ersten Speicher (B1) zur Speicherung von für die globalen Spezifikationen der Messung(en) repräsentativen Daten definieren.

6. Vorrichtung nach Anspruch 5, **dadurch gekennzeichnet, dass** die Speichermittel (BD) einen zweiten Speicher (B2) zur Speicherung von für die lokalen Spezifikationen der Messung(en) und/oder für die Konfigurationsdaten repräsentativen Daten definieren.

7. Vorrichtung nach einem der Ansprüche 5 und 6, **dadurch gekennzeichnet, dass**, wenn mindestens eine Domain (D1) vorhanden ist, die ein Messgerät (M1) aufweist, welches ein auf einem Messmodell beruhendes Messverfahren anwendet, die Speichermittel (BD) einen dritten Speicher (B3) zur Speicherung der für dieses Messmodell repräsentativen Daten definieren.

8. Vorrichtung nach einem der vorhergehenden Ansprüche, **dadurch gekennzeichnet, dass** das Hauptrechenmodul (CMP) Mittel aufweist, um die ersten Daten ausgehend von ergänzenden Daten zu bestimmen, wobei die ergänzenden Daten ein Aggregationsmodell für ergänzende Werte definieren, die für einen Teil des Kommunikationsnetzes, der außerhalb der genannten Domains liegt, repräsentativ sind.

9. Vorrichtung nach einem der Anspruche 6 bis 8, **dadurch gekennzeichnet, dass** der zweite Speicher (B2) Daten speichert, die für das Werteaggregationsmodell und/oder das AggregaUonsmodell für ergänzende Werte repräsentativ sind.

10. Vorrichtung nach Anspruch 7, **dadurch gekennzeichnet, dass** das Hauptrechenmodul (CMP) Mittel aufweist, um die ersten Daten ausgehend von den durch die konfigurierten Messgeräte (Mi) gelieferten lokalen Messungen, den lokalen Spezifikationen der Messung(en) und mindestens einem Werteaggregationsmodell und dem mindestens einen der Messmodelle zu bestimmen.

11. Vorrichtung nach der Kombination der Ansprüche 8 und 10, **dadurch gekennzeichnet, dass** die ergänzenden Daten ein ergänzendes Messmodell definieren.

12. Vorrichtung nach Anspruch 11, **dadurch gekennzeichnet, dass** der dritte Speicher (B3) Daten speichert, die für das Messmodell und/oder das ergänzende Messmodell repräsentativ sind.

13. Vorrichtung nach einem der vorhergehenden Ansprüche, **dadurch gekennzeichnet, dass** das Hilfsrechenmodul (CMA) zweite Daten bestimmt, die für relative Beiträge und/oder absolute Beiträge repräsentativ sind.

14. Vorrichtung nach einem der vorhergehenden Ansprüche, **dadurch gekennzeichnet**, der erste Speicher (B1) die zweiten Daten speichert.

15. Vorrichtung nach einem der Ansprüche 5 bis 14, **dadurch gekennzeichnet, dass** der erste Speicher (B1) die ersten Daten speichert.

16. Vorrichtung nach einem der vorhergehenden Ansprüche, **dadurch gekennzeichnet, dass** sie eine mit den Rechenmitteln (CM) gekoppelte Ausgangsschnittstelle (IS) umfasst, um auf einen Befehl hin an einem Ausgang die ersten und/oder zweiten Daten zu liefern.

17. Vorrichtung nach einem der vorhergehenden Ansprüche, **dadurch gekennzeichnet, dass** sie eine Ausgangsschnittstelle (IS) umfasst, um auf einen Befehl hin aus dem ersten Speicher (B1) die ersten und/oder zweiten Daten zu extrahieren, um sie an einen Ausgang zu liefern.

18. Vorrichtung nach einem der Ansprüche 16 und 17, **dadurch gekennzeichnet, dass** sie eine Managementinformationsdatenbank (MIB) umfasst, die von dem Ausgang der Ausgangsschnittstelte (IS) mit ersten und/oder zweiten Daten gespeist wird.

19. Vorrichtung nach einem der vorhergehenden Ansprüche, **dadurch gekennzeichnet, dass** sie zweite Schnittstellenmittel (IC) umfasst, die in Form von Schnittstellenmodulen (IMj) angeordnet sind, die jeweils nur für ein Messverfahren zuständig sind und die mit den Managementmitteln (MM), mit den Messgeräten (Mi) und mit den Rechenmitteln (CM) gekoppelt sind, damit jedes das zugehörige Messgerät (Mi) konfiguriert und seine lokalen Messungen erfasst, um die Rechenmittel (CM) zu speisen.

20. Vorrichtung nach Anspruch 19, **dadurch gekennzeichnet, dass** das eine der Schnittstellenmodule (4) aus einem externen Messgerät (M4) für eine Domain (A4) des Kommunikationsnetzes (N) besteht.

21. Kommunikationsnetz (N), umfassend mindestens zwei Domains (Ai), die untereinander gekoppelt sind und von denen jede mit einem Messgerät (Mi) ausgestattet ist, um lokale, für die Parameterwerte des lokalen Ende-zu-Ende-Flusses repräsentative Messungen zu liefern, wobei die Messgeräte (Mi) unterschiedliche Messverfahren anwenden, **dadurch gekennzeichnet, dass** es mindestens eine Steuerungsvorrichtung (D) nach einem der vorhergehenden Ansprüche umfasst.
